Europäisches Patentamt

European Patent Office

Office européen des brevets

(19)

(11) Publication number: **0 129 391**
**B1**

(12) ## EUROPEAN PATENT SPECIFICATION

(45) Date of publication of patent specification: 24.08.88

(21) Application number: 84303945.4

(22) Date of filing: 12.06.84

(51) Int. Cl.⁴: **B 32 B 15/01,** A 44 C 21/00,
C 25 D 5/50, C 22 C 5/02,
C 22 C 19/03

(54) Composite material and the production thereof.

(30) Priority: 13.06.83 CA 430291
13.06.83 US 503679

(43) Date of publication of application:
27.12.84 Bulletin 84/52

(45) Publication of the grant of the patent:
24.08.88 Bulletin 88/34

(84) Designated Contracting States:
DE FR GB

(56) References cited:
CH-A- 425 395
DE-C- 528 885
DE-C- 968 703
FR-A- 607 884
FR-A-1 550 563
GB-A-1 207 970
US-A-4 046 644
US-A-4 176 014

(73) Proprietor: Inco Limited
1 First Canadian Place P.O. Box 44
Toronto Ontario M5X 1C4 (CA)

(72) Inventor: Bell, James Alexander Evert
434 Chartwell Road
Oakville Ontario, L6J 4A5 (CA)
Inventor: Conard, Bruce Randolph
153 Balsam Drive
Oakville Ontario, L6J 3X4 (CA)
Inventor: Hope, Douglas Albert
2356 Wadding Crescent
Mississauga Ontario, L5K 1Z3 (CA)

(74) Representative: Greenstreet, Cyril Henry et al
Haseltine Lake & Co. Hazlitt House 28
Southampton Buildings Chancery Lane
London WC2A 1AT (GB)

Courier Press, Leamington Spa, England.

## Description

This invention relates to coinage material, that is to say coins, tokens, coin or token blanks or sheet or strip of coinage thickness for use in making coins or tokens by the conventional steps of stamping out blanks, sizing, coining, rimming and milling.

Since the time of the Lydians gold has been used for coins of high face value. Nowadays, however, the intrinsic value of gold is so high that gold coins are no longer circulated widely, but exist essentially as collectors' or investment items. Moreover gold would be too soft for the severe conditions to which coins are now subjected in everyday use. In particular their increasing use in coin-operated machines subjects current coins to a high degree of wear.

The greater need for high resistance to both wear and corrosion has also led to changes in the silver-coloured alloys now used for higher-value coins. Thus the Canadian 25 ¢ piece was changed from a silver-copper alloy to pure nickel in 1968. In 1965 the United States 25 ¢ piece was changed from a 90% silver-10% copper alloy to a composite structure with 75% Cu-25% Ni face layers sandwiching a pure copper core. Other countries have switched to copper based coinage containing Cu plus Al or Zn or Ni or a combination of the latter elements.

Actual studies of the wear of coinage alloys as a function of the number of years in service are relatively few, but the wear rates for the Ag-Cu, Cu-Ni and Ni coins are well established and are shown in Table 1.

### TABLE 1
### Historical wear data

| Year | Coin | Material | Wt (g) | Average wear rate mg/yr |
|---|---|---|---|---|
| Current | U.S. 5 ¢ | 75% Cu-25% Ni | 5.0 | 4 |
| Pre-1965 | U.S. 25 ¢ | Ag-Cu* | 6.25 | 7 |
| Pre-1968 | Can. 25 ¢ | Ag-Cu* | 5.85 | 6 |
| Current | Can. 5 ¢ | Ni* | 4.55 | 0.9 |

* Canada's New Nickel Coins, printed from Canadian Mining Journal, December, 1968.

These results show that pure nickel is much more resistant to wear than the Cu-Ni or Ag-Cu alloys. It is also superior to these alloys in corrosion properties, the next best of the present coinage alloys being 75% Cu-25% Ni cupronickel. Nickel maintains its bright appearance for longer than its normal service life of 20 to 40 years.

Thus, for a silver-coloured coinage material pure nickel is by far the best. It also possesses unique magnetic properties between those of iron and non-magnetic alloys which allow it to be easily discriminated in either mechanical or electrical coin-operated machines.

The increasing use of coin-operated vending machines for more expensive articles, together with inflation and the hig cost of replacement of paper money, is leading to a demand for coins of higher face value. Larger coins would be inconvenient to carry round in the pocket, but the use of sizes between those of existing coins makes discrimination by the public difficult. It is our object in the present invention to provide a coinage material that combines the gold colour traditionally associated with high value with the wear and corrosion resistance required by present-day conditions of use and exhibited by the best of the silver-coloured coinage materials.

Known gold-coloured alloys do not meet these requirements. Coins of brass or bronze alloys would have inadequate wear resistance and would quickly tarnish in service. To change the silver colour of cupronickel to gold the nickel content must be reduced to less than 10%, at whihc level the alloy tarnishes. Introducing other elements such as Al and Zn into such cupronickel alloys has yielded golden-coloured alloys of only marginally improved tarnish resistance, none being as good as 75% Cu-25% Ni cupronickel, and all being very inferior to pure nickel.

According to the invention a composite coinage material comprises a sheet, strip, coin, token, or a coin or token blank, having a base of which at least the faces are of nickel or a corrosion-resistant nickel alloy such that nickel with thermally diffuse therefrom into a layer of gold coated thereon, and are coated with a deposit of gold or a yellow or reddish yellow alloy fo gold with nickel from 0.1 to 1.5 μm thick, the deposit being metallurgically bonded to the faces and having diffused through it an amount of nickel sufficient to increase its hardness without significantly impairing its gold colour and such that the nickel content of the deposit does not exceed 8%.

Such a material may be made by electrodepositing a coating of gold from 0.1 to 1.5 μm thick on the faces and heating the coating to interdiffuse the gold and nickel from the base to form a metallurgical bond between the base and the coating and to diffuse the desired amount of nickel through the gold coating.

We surprisingly find that coins of such material, particularly those in which the base is of substantially pure nickel and the coating is of gold alloyed only with nickel, can retain their gold colour on the coin faces in accelerated wear tests corresponding to many years expected normal use.

It is of course well known to electrodeposit gold on to a substrate and to form a bond with the substrate by annealing. So far as we are aware, however, none of the disclosures of this process contemplates or suggests that the composite material of the present invention might be useful as a coinage material. Ornamental gold plating of United States coins without interdiffusion is disclosed in US—A—3 834 879 as part of a procedure for differential plating of the pictorial material on the coins, but the resulting plated coins are only for exhibition and not for circulation.

GB—A—1 207 970 is concerned with coating copper or copper alloys with a layer of noble metal, e.g. gold. It proposes interposing a layer of nickel between the copper or copper alloy substrate and the coating of noble metal in order to prevent interdiffusion of copper into the gold. The layers are bonded together by heating and the composite is rolled to reduce its thickness to the final thickness of e.g. 5 to 15 µm.

The invention will now be described in more detail with reference to the accompanying drawing, which is a graph in which wear of coins of three materials (weight loss in mg) in an accelerated wear test is plotted against time (days).

The base of the composite material of the invention is advantageously substantially pure nickel, but can be a high nickel alloy, i.e. containing greater than about 50% nickel, which has corrosion resistance and workability substantially equivalent to that of pure nickel. Corrosion-resistant nickel alloys containing less than 50% nickel, e.g. 75% Cu, 25% Ni, may be used, but are less preferable. Generally speaking, the base of a coin or token structure is monolithic, i.e. made wholly of a single material. However, if desired, the base can be a composite or a sandwich structure provided the surfaces are nickel.

In physical form, the base of the composite material is of coin thickness, i.e. up to about 0.6 cm, but can be of any desired width and length. For example, the base can be sheet or strip out of which coin or token blanks can be stamped. Alternatively, the base can be a coin or token blank stamped from a sheet of nickel, or any intermediate form of the coin or token. Specifically, the base can be a blank which has been sized or sized and coined, or sized, coined and rimmed or sized, coined, rimmed and milled. It will be appreciated that gold plating done prior to rimming and milling will result in coins having an edge with the appearance of nickel, but that in any event the front and rear of the coin or token will have a gold colour.

The gold is advantageously electrodeposited on the surface of the base as pure (24 carat) gold from an electroplating bath using conditions applicable to obtaining a pure electrodeposit. However, the gold need not be 100% pure. In particular the electrodeposit may be of a yellow or reddish yellow alloy of gold with nickel. Gold containing up to about 8% by weight nickel will retain its gold colour equivalent to the colour of 14 carat to 18 carat gold-silver-copper alloy.

The gold coating is advantageously electrodeposited from a cyanide type bath. Such baths are usually of proprietary composition. However, the general types of cyanide baths and conditions of operation are set forth in standard reference sources such as Electroplating Engineering Handbook (3 ed.). A. Kenneth Graham, Van Nostrand Reinhold Company (C) 1971 page 242 and in References 1, 2, 29, 30, 31, 32 and 33 listed on page 255 of that work. It is also within the contemplation of the present invention to deposit gold layers of the requisite thickness by means other than electroplating provided, of course, that the quality of the adhesion of the gold layer to the nickel is at least equivalent to that provided by electroplating. As those skilled in the art are aware, the quality of adhesion of an electroplate depends to a large extent on the care taken in surface preparation and cleaning of the base to be plated. In this regard Chapter 3 of the aforecited Electroplating Engineering Handbook, entitled Metal Surface Preparation and Cleaning, is recommended to those desiring to practice the present invention.

In producing the composite material of the present invention, the annealing step to achieve the metallurgical bond between gold and nickel and to harden the gold is an important feature. Annealing can be carried out any time after deposition of the gold layer, either before or after working or mechanical operation on the composite material. The conditions of temperature and time of annealing are selected so that an interdiffused layer of gold and nickel is achieved without loss of the desired surface colour. For example, with a pure nickel base and a pure gold deposit averaging 0.3 µm thick, effective annealing in hydrogen at 450°C may be achieved in a short time, e.g. in the range of about 2 to 5 minutes. This annealing time has been determined as residence time in a 5 cm tube furnace under laboratory conditions. Those skilled in the art will appreciate that commercial scale furnacing may vary in temperature and time. Nickel has a significant whitening effect on gold. After approximately 6 minutes of annealing under those specified laboratory conditions, the whitening effect of nickel predominates and the gold colour is lost. Annealing under the same conditions for less than two minutes is insufficient to produce the required metallurgical bond. While this example of annealing teaches an effective annealing procedure operable in the context of the present invention, variations are obviously possible. For example annealing can be conducted at lower temperatures, e.g. down to about 350°C for longer times. Hydrogen can be replaced as an annealing atmosphere by any atmosphere, e.g. cracked ammonia or argon, which will prevent oxidation of the nickel. In addition, if alloy gold is used as the layer, less nickel diffusion can be tolerated and therefore annealing should be carried out at temperatures lower than 450°C and for times less than those employed for pure gold. Still further, if gold is employed in thicker layers, e.g. from 0.5 to 1.0 µm, somewhat greater times or higher temperatures should be employed in annealing in order to permit

3

diffusion of some nickel right through the gold layer in order to induce increased hardness throughout. Conversely, extremely thin gold layers, e.g. about 0.1 µm, must be annealed for very short times in order to retain the visual yellow effect of the gold. Annealing time is also dependent upon the thickness of the nickel-containing base, generally longer times being necessary with thicker bases. The annealing time also depends on the type of heating equipment used. For example, with high frequency induction skin heating shorter times can be used, because there is no need to allow time for the entire base to come to annealing temperature. In general, annealing can be carried out at temperatures of about 350 to about 650°C for about thirty minutes to about a few seconds.

Some examples will now be given.

Example 1

A mint Canadian 25 ¢ pure nickel coin was cleaned in a mild acidic solution and plated at 60°C at 5 mA/cm² for 1—2 minutes from a standard cyanide-type Au plating bath obtained from Johnson Matthey and Mallory Ltd. under the trademark "Orosene 999 24 KT bright gold". The weight of the Au plated was 6 mg and the apparent calculated thickness of the Au layer was 0.3 µm. This coin was subsequently annealed at 450°C for 3 to 4 minutes in pure hydrogen, after which it was gold in colour, lighter than the colour of 24 carat gold.

The following coins were dipped into a 5 wt % NaCl solution which had been adjusted to pH 4 with nitric acid once per day for four days and allowed to air dry at room temperature the balance of the day.

1. Pure Ni Canadian 25 ¢.
2. A U.S. 25 ¢ piece having outer faces of 75% Cu-25% Ni and a copper core.
3. A gold coated nickel coin, with the gold coating prepared according to the procedure detailed above.
4. A 1983 British Pound containing 75% Cu-18% Zn-7% Ni.
5. A gold coated 75% Cu-25% Zn coin, with the gold coating prepared following the same procedure as 3.

The surfaces of the pure Ni coin (1) and the new gold-on-Ni coin (3) were not visibly tarnished. The U.S. cupronickel 25 ¢ (2) lost its metallic lustre but had no visible evidence of a tarnish. The British Pound (4) and the Au-on-brass composite (5) lost their metallic lustre and had objectionable tarnish formed on their surfaces, which is undesirable for high denomination coins.

Example 2

Eight Canadian 25 ¢ pure nickel coins were each plated with 6 mg of Au according to the procedure in Example 1. Four of the coins were subsequently annealed at 450°C for 4 min in pure hydrogen, while the other four coins were unannealed.

The eight coins were then subjected to wear testing. The apparatus for wear testing in this Example and in other Examples herein comprised a ceramic jar mill having internal dimensions of 10.16 cm high and 12.7 cm wide and closely lined with a zippered bag made of metallographic polishing cloth. The coins were introduced into the bag along with an equal weight of metal shot 0.3 to 1.9 cm in diameter made of an alloy containing nominally (in weight percent) 54% nickel, 17% molybdenum, 15% chromium, 5% iron and 4% tungsten, 13 grams of leather strip about 3.8 cm×0.3 cm×0.5 cm and 7 grams of cork No. 00 about 0.12 cm in diameter. The leather strip was soaked with synthetic sweat solution (40 g NaCl, 5 g Na₂HPO₄, 4 ml lactic acid, made up to 4 l with distilled water, the bag was zippered closed, fitted into the ceramic jar mill and then rotated 5 days at 45 rpm (less than critical speed) with the leather being periodically rewet with synthetic sweat solution.

The mean weight loss of the annealed coin was 6.8 mg while that for the unannealed coins was 9.0 mg. The annealed samples had a more uniform colour than the unannealed sample.

Example 3

This example shows the effect of varying the annealing time.

Five Canaidan pure Ni 25 ¢ pieces were plated with 24 carat Au, by the procedure set forth in Example 1. The coins were placed into a 5 cm tube furnace having a H₂ atmosphere at 450°C for times ranging from about 1 to about 10 min. The surfaces of the Au plated coins retained their 24 carat appearance up to 3 minutes. After about 4 minutes the colour matched the colour of 18 carat (75% Au, 15% Ag, 10% Cu) gold. After about 6 minutes the gold colour had largely disappeared.

Example 4

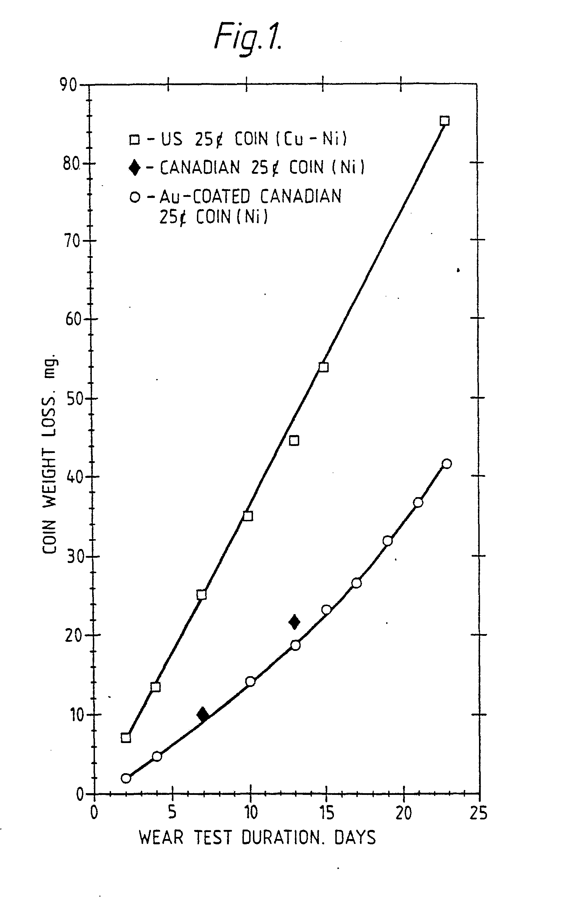

Two samples of the Au coated pure Ni Canadian 25 ¢ pieces from Example 2, containing about 6 mg of Au in a layer 0.3 µm thick annealed at 450°C for 4 minutes, together with two U.S. cupronickel 25 ¢ pieces and two Canadian pure nickel 25 ¢ pieces were tumbled as described in Example 2 in the ceramic mill at 45 rpm in a cloth bag containing cork and leather wetted with synthetic sweat solution and an equal weight of metal. The weight loss of each coin was measured each day. The results plotted in Figure 1 show that the wear rate of the U.S. cupronickel is approximately twice that of pure nickel and that the weight loss of the Au plated and annealed nickel coins was indistinguishable from pure nickel Canadian 25 ¢ pieces. It was not anticipated that a coin having roughtly 6 mg of gold on nickel would still have a good surface appearance after 20 mg had worn away. Yet even after losing 40 mg of weight the Au coated coin still retained its golden colour, and only on the edges of the coin was Au layer abraded away.

Example 5

Eight pure Ni Canadian 25 ¢ pieces were Au plated using the procedure set forth in Example 1 and annealed at 450°C for 4 minutes. The measured weight of gold electrodeposited was 6 to 8 mg per coin. These coins, together with eight Canadian nickel 25 ¢ pieces and eight U.S. cupronickel 25 ¢ pieces, were repeatedly placed by hand through a mehcanical vending machine coin sorting mechanism.

After 8,000 cycles, the U.S. cupronickel coins had lost much of their knurled edge. The edge was quite smooth. After 10,000 cycles the Canadian nickel 25 ¢ piece showed some slight rounding of the edge and the Au plated and annealed Canadian 25 ¢ piece still retained their original golden colour even on the edges.

After 18,000 cycles, the knurled edges on the Canadian 25 ¢ piece started to show a slight wear. The Au plated and annealed coins still retained their original golden colour on the coin faces after 18,000 cycles and showed the same slight knurled edge wear as the pure nickel 25 ¢ pieces. Some loss of golden colour occurred on the edges after 18,000 cycles.

After 18,000 cycles, the total weight of Au on the coins was analysed as 5.25 mg (average) indicating only about a 1.7 mg Au loss and 70% Au retained during the test. Eighteen thousand cycles corresponds to approximately 50 years of wear on a coin at an average use of once per day in a vending machine.

Example 6

The tumbling test used in Examples 2 and 4 was repeated using the coinage charge of two pure nickel Canadian 25 ¢ pieces, two U.S. cupronickel 25 ¢ pieces, one Canadian nickel 25 ¢ piece plated with 6 mg of Au and annealed as in Example 1 for 4 minutes at 450°C in pure $H_2$, and one Canadian nickel 25 ¢ piece plated with 12 mg of Au and annealed to have the same surface colour as the coin having 6 mg of Au after annealing. The tumbling mill was rotated for 1 day at 60 rpm, 3 days at 27 rpm and 1 to 5 days at 45 rpm. The mean weight loss of the coins after this treatment for 5 day and 9 day periods is shown below:

|  | 5 day mg | 9 day mg |
|---|---|---|
| U.S. 25 ¢ cupronickel | 18.9 | 32.7 |
| Canadian 25 ¢ pure Ni | 6.2 | 14.6 |
| 6 mg Au on Canadian 25 ¢ | 6.9 | — |
| 12 mg Au on Canadian 25 ¢ | 7.4 | 15.8 |

The 6 mg and 12 mg Au coins were indistinguishable in appearance after the test. Both retained their original golden colour even on the edges.

Example 7

Two samples of pure nickel coin stock electroplated with 0.3 µm of gold were subjected to Auger analysis to determine the nature of the gold layer in the unannealed conditions and after annealing as set forth in Example 1. Analysis of the unannealed sample indicated essentially pure gold in the electrodeposited layer with a very sharp boundary to pure nickel of the base. The annealed sample showed essentially a 95% Au-5% Ni composition throughout the gold layer with a somewhat diffuse but relatively sharp boundary to the essentially pure nickel of the base.

Example 8

The following specimens were dipped once per day for 3-1/2 days into a 5 wt % NaCl solution which had been adjusted to a pH of 4 with nitric acid, and allowed to air dry at room temperature for the balance of the day.

6. A gold coated 18/8 stainless steel base.
7. A gold coated 75% Cu-25% Ni base.

The gold was plated and the composite structure annealed essentially as described in Example 1. The gold plated stainless steel sample (6) showed evidence of tarnish. The gold plated cupronickel sample (7) showed only a slight green oxidation product which was easily wiped off but might remain in crevices in use.

**Claims**

1. A composite coinage material having high resistance to wear and corrosion comprising a sheet, strip, coin, token, or a coin or token blank, having a base of which at least the faces are of nickel or a corrosion-resistant nickel alloy such that nickel will thermally diffuse therefrom into a layer of gold coated thereon, characterised in that the faces are coated with a deposit from 0.1 to 1.5 µm thick of gold or a yellow or a reddish-yellow alloy of gold with nickel, the deposit being metallurgically bonded to the faces and having diffused through it from the base an amount of nickel sufficient to increase its hardness without significantly impairing its gold colour and such that the nickel content of the deposit does not exceed 8%.

2. A composite coinage material according to claim 1 in which the thickness of the deposit does not exceed 1 µm.

3. A composite coinage material according to claim 1 or claim 2 in which the base consists of substantially pure nickel.

4. A composite coinage material according to claim 1 or claim 2, in which the base consists of a nickel-copper alloy.

5. A composite coinage material according to any preceding claim which consists of a coin or token or a rimmed and milled coin or token blank and in which the base is monolithic and the gold coating covers the whole of its surface.

6. A process for producing a coinage material according to any preceding claim, characterised by the steps of electrodepositing a layer from 0.1 to 1.5 µm thick of gold or a yellow or reddish-yellow alloy of gold with nickel on at least the faces of a nickel or corrosion-resistant nickel-copper alloy base and thereafter interdiffusing the gold and nickel from the base to form a metallurgical bond between the gold deposit and the base and to introduce into and diffuse through the gold deposit an amount of nickel sufficient to increase its hardness but not enough to significantly impair its gold colour and such that the nickel content of the deposit does not exceed 8%.

7. A process according to claim 6 in which the interdiffusion is performed by heating at a temperature of from 350 to 650°C.

8. A process according to claim 6 or claim 7 in which the interdiffusion is performed in an atmosphere of hydrogen or cracked ammonia.

9. A process according to any one of claims 6 to 8 in which gold is electrodeposited on a sheet or strip of nickel or a corrosion-resistant nickel-copper alloy, coins or tokens or coin or token blanks are formed from the coated sheet or strip, and the interdiffusion is then performed.

**Patentansprüche**

1. Münz-Verbundswerkstoff mit hoher Verschließ- und Korrosionsbeständigkeit in der Form von beispielsweise Blech, Band, Münzen, Marken oder eines Münz- oder Markenrohlings mit einem zumindest an der Oberfläche aus Nickel oder einer korrosionsbeständigen Nickellegierung bestehenden Grundkörper, aus dem Nickel thermisch in einen darauf befindlichen Goldüberzug diffundiert, dadurch gekennzeichnet, daß die Oberfläche mit einem 0,1 bis 1,5 µm dicken Überzug aus Gold oder einer gelben oder rötlich-gelben Gold-Nickel-Legierung überzogen und die Schicht metallurgisch mit der Oberfläche verbunden ist, sowie im Wege der Diffusion aus dem Grundkörper eine Nickelmenge aufgenommen hat, die ohne Beeinträchtigung der goldenen Farbe eine Erhöhung der Härte bewirkt, ohne jedoch 8% zu übersteigen.

2. Verbundwerkstoff nach Anspruch 1, dadurch gekennzeichnet, daß die Dicke des Niederschlags höchstens 1 µm beträgt.

3. Verbundwerkstoff nach Anspruch 1 oder 2, dadurch gekennzeichnet, daß der Grundkörper aus im wesentlichen reinem Nickel besteht.

4. Verbundwerkstoff nach Anspruch 1 oder 2, dadurch gekennzeichnet, daß der Grundkörper aus einer Nickel-Kupferlegierung besteht.

5. Verbundwerkstoff nach einem der Ansprüche 1 bis 4, dadurch gekennzeichnet, daß er aus einer Münze, einer Marke oder einem berandeten und gerändelten Münz- oder Markenrohling mit einem monolithischen Grundkörper besteht und der Goldüberzug die gesamte Oberfläche bedeckt.

6. Verfahren zum Herstellen eines Verbundwerkstoffes nach einem der Ansprüche 1 bis 5, dadurch gekennzeichnet, daß zumindest die Oberfläche eines Grundkörpers aus Nickel oder einer korrosionsbeständigen Nickel-Kupfer-Legierung elektrolytisch mit einer 0,1 bis 1,5 µm dicken Schicht aus Gold oder einer gelben oder rötlich-gelben Gold-Nickel-Legierung versehen wird, als-dann im Wege einer Interdiffusion des Goldes und des Nickels aus dem Grundkörper eine metallurgische Bindung zwischen dem Goldüberzug und dem Grundkörper herbeigeführt und dabei eine für eine Erhöhung der Härte ausreichende, jedoch die goldene Farbe des Überzuges nicht merklich beeinträchtigende und einen Gehalt von 8% im Überzug nicht übersteigende Nickelmenge in und durch den Goldüberzug diffundiert.

7. Verfahren nach Anspruch 6, dadurch gekennzeichnet, daß die Interdiffusion beim Glühen mit einer Temperatur von 360 bis 650°C stattfindet.

8. Verfahren nach Anspruch 6 oder 7, dadurch gekennzeichnet, daß die Interdiffusion in einer Atmosphäre aus Wasserstoff oder Ammoniak-Spaltgas stattfindet.

9. Verfahren nach einem der Ansprüche 6 bis 8, dadurch gekennzeichnet, daß auf einem Blech oder Band aus Nickel oder einer korrosionsbeständigen Nickel-Kupferlegierung Gold elektrolytisch abgeschieden und alsdann aus dem Blech oder Band Münzen, Marken oder Münz- oder Markenrohlinge hergestellt und der Interdiffusion unterworfen werden.

**Revendications**

1. Matériau composite pour les monnaies possédant une résistance élevée à l'usure et à la corrosion

6

comprenant une plaque, un feuillard, une pièce, un jeton, ou un flan de pièce ou de jeton, qui posséde une base dont au moins les faces sont en nickel ou sont faites d'un alliage de nickel résistant à la corrosion et tel que le nickel pourra se diffuser thermiquement à partir d'elles dans une couche d'or formant leur revêtement, caractérisé en ce que les faces sont revêtues d'un dépôt d'or ou d'un alliage jaune ou jaune rougeâtre d'or et de nickel d'une épaisseur de 0,1 à 1,5 µm, le dépôt étant rendu adhérent d'une manière métallurgique aux faces et possédant, diffusée à travers lui à partir de la base, une proportion de nickel suffisante pour augmenter sa dureté sans altérer significativement sa couleur dorée et telle que la teneur en nickel du dépôt ne dépasse pas 8%.

2. Matériau composite pour les monnaies selon la revendication 1, dans lequel l'épaisseur du dépôt ne dépasse pas 1 µm.

3. Matériau composite pour les monnaies selon la revendication 1 ou la revendication 2, dans lequel la base est composée de nickel pratiquement pur.

4. Matériau composite pour les monnaies selon la revendication 1 ou la revendication 2, dans lequel la base est composée d'un alliage de nickel et de cuivre.

5. Matériau composite pour les monnaies selon l'une quelconque des revendications précédentes, qui est constitué par une pièce ou un jeton ou un flan de pièce ou de jeton cerclé et guilloché, et dans lequel la base est monolithique et le revêtement en or recouvre la totalité de sa surface.

6. Procédé de fabrication d'un matériau pour les monnaies selon l'une quelconque des revendications précédentes, caractérisé par les étapes du dépôt électrolytique d'une couche d'une épaisseur de 0,1 à 1,5 µm faite d'or ou d'un alliage jaune ou jaune rougeâtre d'or et de nickel sur au moins les faces d'une base faite de nickel ou d'un alliage de nickel et de cuivre résistant à la corrosion et par la suite de la réalisation d'une interdiffusion de l'or et du nickel venant de la base de façon à constituer une adhésion métallurgique entre le dépôt d'or et la base et à introduire dans et à diffuser à travers le dépôt d'or une proportion de nickel suffisante pour augmenter sa dureté, mais pas assez grande pour altérer d'une manière significative sa couleur dorée, et telle que la teneur en nickel du dépôt ne dépasse pas 8%.

7. Procédé selon la revendication 6, dans lequel l'interdiffusion est réalisée par un chauffage à une température allant de 350 à 650°C.

8. Procédé selon la revendication 6 ou la revendication 7, dans lequel l'interdiffusion est réalisée dans une atmosphère d'hydrogène ou provenant de craquage d'ammoniac.

9. Procédé selon l'une quelconque des revendications 6 à 8, dans lequel l'or est déposé électrolytiquement sur une plaque ou un feuillard en nickel ou fait d'un alliage de nickel et de cuivre résistant à la corrosion, et des pièces ou des jetons ou des flans de pièces ou de jetons sont ensuite fabriqués à partir de la plaque ou du feuillard revêtus, l'opération d'interdiffusion était alors effectuée.

Fig.1.

□ – US 25¢ COIN (Cu–Ni)
◆ – CANADIAN 25¢ COIN (Ni)
○ – Au-COATED CANADIAN
     25¢ COIN (Ni)

COIN WEIGHT LOSS. mg.

WEAR TEST DURATION. DAYS